# EUROPEAN PATENT SPECIFICATION

(11) **EP 3 285 015 B1**
(45) Date of publication and mention of the grant of the patent: **03.07.2019**
(21) Application number: 17185089.4
(22) Date of filing: 07.08.2017
(51) Int. Cl.: F24F 3/16, F24F 11/30, F24F 12/00, F24F 110/64, F24F 110/70, F24F 110/68, F24F 110/66, F24F 11/83, F24F 110/10, F24F 110/20, F24F 110/50

(54) **GROUP FOR ANALYSIS AND CONTROL OF THE VENTILATION OF AN INTERNAL ENVIRONMENT OR FIRST ENVIRONMENT**
GRUPPE ZUR ANALYSE UND STEUERUNG DER BELÜFTUNG EINER INTERNEN UMGEBUNG ODER ERSTEN UMGEBUNG
GROUPE D'ANALYSE ET DE COMMANDE DE LA VENTILATION D'UN ENVIRONNEMENT INTERNE OU D'UN PREMIER ENVIRONNEMENT

(30) Priority: 12.08.2016 IT 201600084955
(43) Date of publication of application: 21.02.2018
(73) Proprietor: TOONE S.a.s. di Zanatta Marco & C., 31027 Spresiano (TV) (IT)
(72) Inventor: ZANATTA, Marco, 31027 Spresiano (Treviso) (IT)
(74) Representative: Feltrinelli, Secondo Andrea

(56) References cited:
- EP-A1- 1 962 030
- EP-A2- 2 397 787
- WO-A1-2016/002072
- GB-A- 2 528 642
- US-A- 4 841 733
- US-A1- 2012 064 818

## Description

### TECHNICAL FIELD OF THE INVENTION

The present invention regards a group for analysis and control of the ventilation, in particular the mechanical ventilation of an internal environment, such as a room of a home, of an office, of a hospital, for example an operating room, of a work environment, of a factory, of a warehouse for processing or for the maturation of foods, of a moving means, such as a camper, a train, a bus or a car.

### STATE OF THE PRIOR ART

In large cities and periphery areas, the quality of the air is gradually deteriorating due to various factors, and this places the health conditions of the citizens at serious risk.

Moreover, for the ventilation or aeration of environments, systems have been proposed for mechanical ventilation for environments that comprise ventilators, with which it is not always possible to ensure good air quality in the homes or in the offices.

EP1962030A1 teaches a heat exchange fan with openings for suctioning air from an external environment and from an internal environment as well as openings for inserting air in an internal environment and in an external environment.

### OBJECTS OF THE INVENTION

One object of the present invention is to provide a new group for analysis and control of the ventilation of an internal environment or first environment.

Another object of the present invention is to provide a group for analysis and control as stated above which is able to ensure the supply of high quality air inside an environment to be controlled.

Another object of the present invention is to provide a group for analysis and control capable of operating in different operating positions as a function of the analyses carried out.

In accordance with one aspect of the invention, a group is provided for analysis and control according to claim 1.

The dependent claims refer to preferred and advantageous embodiments of the invention.

### BRIEF DESCRIPTION OF THE DRAWINGS

Other characteristics and advantages of the invention will be more evident from the description of an embodiment of a group for analysis and control, illustrated by way of example in the set of drawings in which:

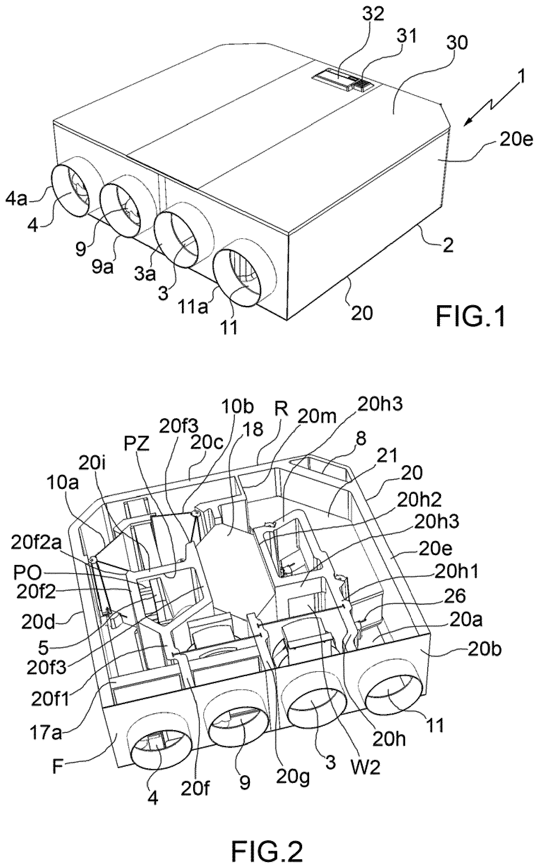

- figure 1 is a slightly top perspective view of a group according to the present invention;

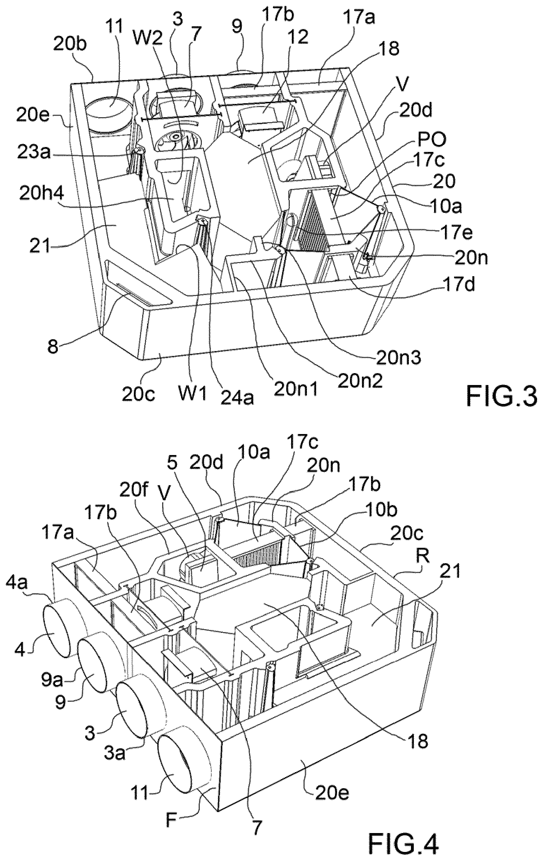

- figures 2 to 5 are slightly top perspective views of the group of figure 1 with cover removed and valves or shutter components shown for illustrating purposes in two respective operating positions;
- figure 6 is a top view of the group of figure 1 with cover removed and valves shown for illustrating purposes in two respective operating positions;
- figure 7 is a top view of the group of figure 1;
- figures 8 to 11 are sectional views according to the line, respectively, VIII-VIII, IX-IX, X-X and XI-XI of figure 7;
- figures 12 to 14 are views similar to figure 6, in each of which the air flow in a group in accordance with the present invention according to a respective operating cycle being shown;

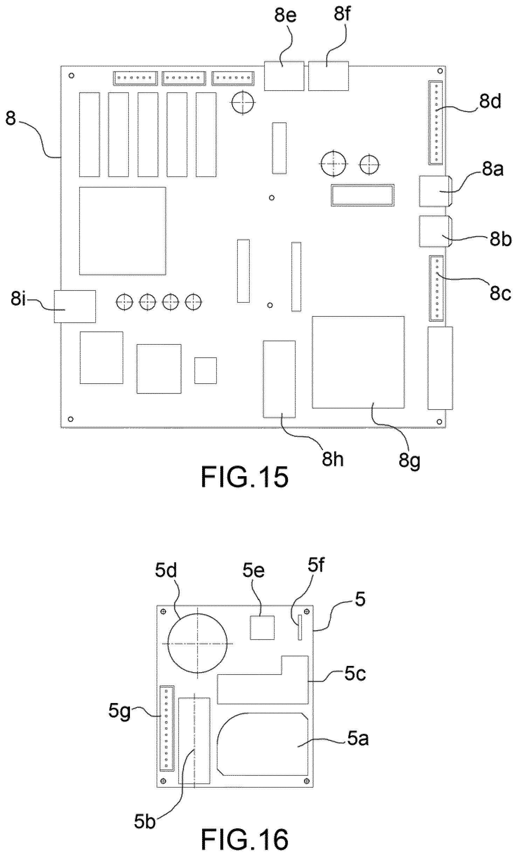

- figure 15 schematically shows a processing unit of a group according to the present invention;
- figure 16 schematically shows sensor or examination means of a group according to the present invention;
- figures 17 and 18 illustrate enlarged scale details of a group according to the present invention.

In the drawing set, equivalent parts or components are marked by the same reference numbers.

### EMBODIMENTS OF THE INVENTION

With reference to the enclosed figures, a group 1 is illustrated for analysis and control of the ventilation of at least one internal environment or first environment according to the present invention, which comprises a containment box or casing 2, at least one first opening 3 for introducing a fluid or first fluid, such as air or other types of fluids, liquids or gases depending on the final use, into an internal environment or first environment, such as a room of a home, of an office or of a hospital, as well as at least one second opening 4 for suctioning or drawing a fluid or first fluid, such as air or other types of fluids, liquids or gases, from an external environment or second environment, sensor means or first sensor means 5 for the air suctioned from the at least one second opening 4, which sensor or examination means 5 are arranged to detect the quality of air or the fluid suctioned from the second opening 4 or the presence as well as the value of compounds, e.g. the compounds indicated hereinafter, in the air or fluid suctioned from the second opening 4. The openings 3 and 4 can be delimited by respective hollow outlets 3a, 4a extended from respective walls of the casing 2 and at which pipes or ducts are connected or fixable for conveying air, respectively, from an internal environment and from an external environment.

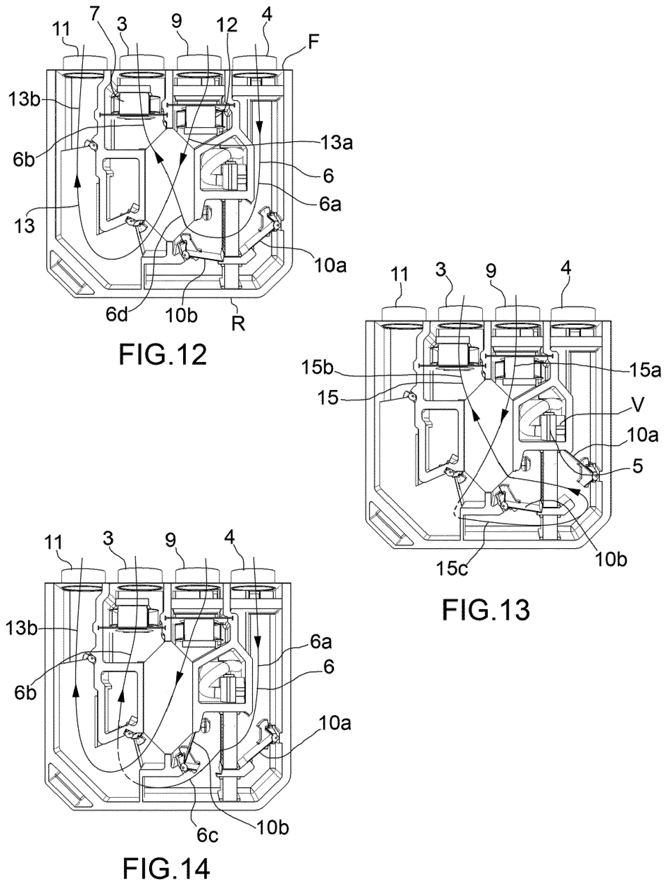

The containment box or casing 2 delimits at least one first path 6 of air transmission or transfer (see figure 12) from the second opening 4 to the first opening 3, i.e. the casing 2 internally delimits a substantially fluid-tight path 6 by means of respective delimiting walls and, possibly, suitably driving respective valves or valve components.

Moreover, the group also comprises first means 7 for suctioning or thrusting air along the first path 6, which are set for conveying air from the second opening 4 to the first opening 3. The first suctioning or thrusting means 7 can for example comprise a fan with radial or axial blades arranged in the first introduction opening 3 or in the second suction or drawing opening 4 or better yet in a delimiting outlet 3a, 4a thereof or along and intercepting the first transmission or transfer path 6. Clearly, the group 1 also comprises means for supplying the first suction or thrust means 7, for example an electric motor or a motor of another type, such motor controllable by means of a button or a remote control or drivable by a processing unit 8 as a function of the examined data.

The group 1 is also provided with at least one processing unit 8, such as a CPU set to receive first data from the sensor means 5 relative to the air of the external environment as well as to examine the first data, so as to consequently drive the first means 7 for suctioning or thrusting in a manner such to regulate or allow/obstruct the flow of air through the first path 6 from the second opening 4 to the first opening 3.

If desired, the group also comprises at least one third opening 9 for suctioning or drawing a fluid or a second fluid, such as air or other types of fluids, liquids or gases from the internal environment and sensor or examination means for the air suctioned from the third opening, which can correspond with the first sensor means or include second sensor means. In such case, the processing unit 8 is set to receive, from the sensor means, second data pertaining or relative to the air of the internal environment as well as to examine such second data, so as to drive the first suction or thrust means 7 and/or actuation means (not illustrated in the drawings) of at least one valve 10a, 10b for intercepting the first path 6 as a function of the first and second examined data.

The group 1 can also be provided with at least one fourth opening 11 for expelling a fluid or a second fluid, such as air or other types of fluids, liquids or gases into the external environment or second environment and second means for suctioning or thrusting air 12. In such case, the containment box or casing 2 delimits at least one second path 13 (see figure 12) for transmission or transfer of air from the third opening 9 to the fourth opening 11, i.e. the casing 2 internally delimits a substantially fluid-tight path 13 by means of respective delimiting walls and, possibly, suitably driving respective valves or valve components. The second suction or thrust means 12 are instead set to convey air from the third opening 9 to the fourth opening 11.

The openings 9 and 11 can be delimited by respective hollow outlets 9a, 11a extended from respective walls of the casing and at which pipes or ducts are connected or fixable for conveying air, respectively, from an internal environment and from an external environment.

The second suction or thrust means 12 can for example comprise a fan with radial or axial blades arranged in the third opening 9 or in the fourth opening 11 or better yet in a delimiting outlet 9a, 11a thereof or along and intercepting the second transmission or transfer path 13. Clearly, the group 1 also comprises supply means for the second suction or thrust means 12, e.g. an electric motor (not illustrated in the figures) or a motor of another type, such motor controllable by means of button or remote control or actuatable by the processing unit 8 as a function of the examined data.

In this case, the sensor or examination means 5 are arranged to detect the quality of air or the fluid in the internal environment or suctioned from the third opening 9 or the presence as well as the value of compounds, e.g. the compounds indicated hereinafter, in the air or fluid in the internal environment or suctioned from the third opening 9.

According to such variant, the processing unit 8 is set to drive the second suction or thrust means 12 and/or second means for actuating a valve for intercepting the second path 13 as a function of the first and/or second examined data.

A group 1 according to the present invention can also be provided with at least one interception valve 10a, 10b for intercepting the first 6 and/or second 13 path as well as with actuation means (not illustrated in the figures) for actuating the interception valve 10a, 10b, which are set to move such valve so as to vary the free passage section of the respective path 6, 13. In such case, the processing unit 8 is set to drive the actuation means for the interception valve 10a, 10b as a function of the examined data.

The actuation means can comprise, for example, an electric motor or a motor of another type.

If desired, the group 1 is also provided with at least one valve component and with means (not illustrated in the drawings, e.g. an electric motor of a motor of another type) for displacing the valve component, while the containment box or casing 2 delimits at least one third path 15 for transmitting or transferring air (see figure 13) from the third opening 9 to the first opening 3. In such case, the valve component is set to allow or obstruct or prevent the passage of fluid through the third path 15 and the processing unit 8 is set for driving the displacing means as a function of the examined data.

The third path 15 can comprise, from an inlet end to an outlet end and hence from the third opening 9 to the first opening 3, a first section 15a corresponding to an initial section of the second path 13 and a second section 15b corresponding to a terminal section of the first path 6.

The valve component or a valve component can correspond to the or to a respective interception valve 10a, 10b, and in such case the interception valve 10a, 10b would be positionable in a first position in which it opens the first and/or the second path and closes the third path and a second position in which it opens the third path and closes the first and/or the second path.

Alternatively, the valve component could be a component different from the interception valve or from an interception valve, and in such case the valve component(s) and the interception valve(s) are positionable in a first position in which the first and/or the second path are open, while the third path is closed and a second position in which the third path is open and the first and/or the second path is/are closed.

A group according to the present invention can then comprise means for filtering or purifying 17a, 17b, 17c, 17d, 17e air placed along a transmission and transfer path 6, 13, 15, preferably along each path 6, 13, 15.

The filtering or purification means can include activated carbons, a germicide lamp, H14, F8, F9 filters and/or filters for the air with high particulate efficiency (HEPA filters).

For such purpose, the group 1 can preferably include a first filter 17a set to filter air entering into the group through the second opening 4 and a second filter 17b set to filter air entering into the group through the third opening 9.

If desired, a group according to the present invention also comprises at least one heat exchanger 18, which intercepts the first 6 and the second 13 path and is set to allow the heat exchange between the air conveyed through the first path 6 and the air conveyed through the second path 13. The heat exchanger 18 can be arranged in an intermediate or central position of the group 1.

With regard in detail to the sensor means 5, these can be such to detect the presence as well as the value, in the air suctioned from the second opening 4 and/or from the third opening 9, of or more of the following compounds: CO₂, oxygen, particulate formed by particles with diameter less than 10 µm or PM10, particulate formed by particles with diameter less than 2.5 µm or PM2.5, particulate formed by particles with diameter less than 0.3/0.1 µm or PM0.3-0.1, volatile organic compounds or VOC and/or radon. Moreover, the sensor means 5 can be such to detect the value of the temperature and/or of the humidity.

If desired, the sensor means 5 can comprise one or more circuit boards or similar for the support of one or more of the following sensors;
- a CO₂ sensor 5a, for example an infrared sensor with spectra filter;
- an oxygen sensor 5b, e.g. an infrared sensor;
- a particulate sensor 5c for detecting particles with diameter less than 10 µm, less than 2.5 µm and/or less than 0.3/0.1 µm, for example an optical counter of particles with OPC pulses;
- a volatile organic compounds sensor or VOC 5d, for example an electrochemical sensor diffused in the room, redox with electrolytic melting;
- a radon sensor;
- a humidity sensor 5e, e.g. an electro-resistive hygrometer;
- a temperature sensor 5f, e.g. thermoresistor with temperature coefficient or NTC.

In addition, the circuit board of the sensor means 5 can also have an outlet for the power supply and data output or emission 5g.

The main values that can be controlled by the processing unit 8 are the particulate, the CO₂, the oxygen, the radon, the VOC, while the humidity values are of secondary importance and the temperature is detected with the purpose of monitoring the efficiency of the exchanger and the thermal delta of the currents during heat exchange.

For exemplifying purposes, the processing unit intervenes by varying the flows or the currents of air when the values of:
- CO₂ are greater than 800 ppm, even if it is possible to temporarily allow a value of 1200ppm;
- oxygen are less than 20.5%;
- PM10 particulate are greater than 40 µg/m³, even if it is possible to temporarily accept values of 50 µg/m³;
- PM2.5 particulate are greater than 20 µg/m³, even if it is possible to temporarily accept values of 25 µg/m³;
- PM0.3/0.1 particulate are greater than 5 µg/m³, even if it is possible to temporarily accept values of 8 µg/m³;
- VOC are greater than 3ppm;
- radon are greater than 100Bq/m³;
- humidity are greater than 75%.

In the following table, some data is reported pertaining to possible sensor means usable in a group according to the present invention.

| Sensor | Technology used by the sensor | Work range | Resolution | Precision of the reading |
|---|---|---|---|---|
| Temperatures | NTC thermoresistor | from -20°C to +50°C | 0.1°C | ± 0.5°C |
| Humidity | electro-resistive hygrometer | 0-99% RH | 0.1%RH | ± 3% |
| VOC | Electrochemical sensor diffused in redox scanning chamber with electrolytic melting | 0-1000ppm | 0.01ppm | ± 3% |
| PM10-PM2.5-PM0.3\0.1 Particulate | Optical counter of particles with OPC pulses | 0-4000 pcs/L | | ± 6%. |
| CO₂ | Infrared sensor with spectra filter | 0-5000ppm | 40ppm | ± 2% |
| Oxygen | Infrared sensor | 0-25% | 1% | ± 2% |
| Radon Gas | Sensor, also remote | from 0 Bq/m³ to 200Bq/m³ | | 10% after 2h |

The group can also comprise ducts or the like 50a, 50b for conveying air to the sensor means 5, and such ducts can be placed in fluid communication with the openings 4 and 9, for example they can lead into the casing 2 at the openings 4 and 9, if desired with inlet mouths 50c, 50d or in any case in communication with the environment, respectively external and internal.

More particularly, the group 1 comprises at least one first duct 50a in fluid communication with the second opening 4 and set to convey air from the second opening 4 to the sensor means 5 and at least one second duct 50b in fluid communication with the third opening 9 and set to convey air from the third opening 9 to the sensor means 5.

For such purpose, the ducts 50a and 50b can be intercepted by means of respective valves actuatable by the processing unit 8, remotely or manually.

According to the non-limiting embodiment illustrated in the figures, the ducts 50a and 50b lead into a same sensor means or unit or into a same duct leading into the same sensor means or unit, and are intercepted by means of a respective first valve V1 and second valve V2, if desired butterfly, such valves actuatable by a motor, e.g. by the same motor M, which could be electric or another type, if desired controlled by the processing unit 8, remotely or manually.

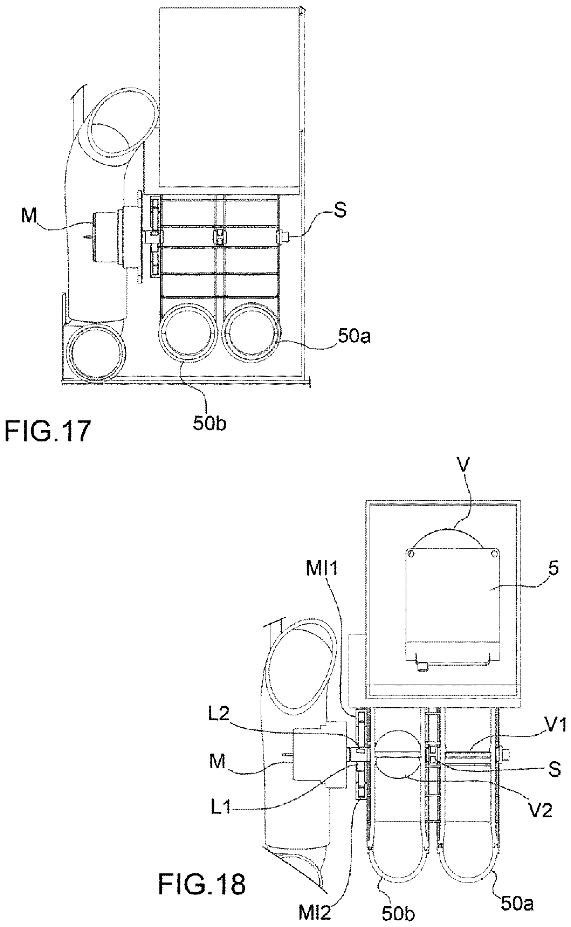

More particularly, the motor M is set to drive a shaft S, in a single piece or composed of multiple sections connected together or integral in rotation, such shaft S being set to control the two valves V1 and V2. Advantageously, by controlling the movement of a first valve V1 from a closed position (see figure 18) of the respective duct 50a to an open position of the same duct or in any case by controlling a movement of the valve V1 so as to increase the free passage section of the duct 50a towards the sensor means 5, the movement of a second valve V2 is determined from an open position (see figure 18) of the respective duct 50b to a closed position thereof or in any case a movement of the second valve V2 is controlled so as to decrease the free passage section of the duct 50b towards the sensor means 5 and vice versa.

In addition, the group can be provided with one or more microswitches MI1, MI2 set to detect the position of the shaft S and hence of the valves V1, V2 and to communicate it to the processing unit 8 or in any case to allow the detection by the processing unit 8. For such purpose, the shaft S can have or be integral or connected with projections LI, L2, each set to abut against a microswitch or a respective microswitch MI1, MI2 when one valve V1 or V2 is in closed position and the other valve V2 or V1 is in open position. In practice, when the shaft S is moved or rotated into a first position, so as to open the valve V1 and close the valve V2, a first projection L1 is brought into abutment against a first microswitch MI1 and the other projection does not engage the microswitch/microswitches, while by rotating or moving the shaft S into a second position, so as to open the valve V2 and close the valve VI, the other projection L2 is brought into abutment against the microswitch MI1 or against a second microswitch MI2.

Due to such expedient, it is possible to use only one sensor unit 5, thus reducing the size and costs for making the same. In addition, the air scanning values obtained from the same sensors are in accordance with each other, since they are evaluated by the same sensor unit, so that the processing unit 8 does not have to carry out an operation of integration or adaptation or phasing of the values detected by different scanning units.

Moreover, the air analyzed by the sensor means 5, after having been examined or scanned, is sent into a zone or path of the group upstream of a respective filter, in particular a third filter 17c, such that also such air is purified before its reintroduction into the environment. For such purpose, the positioning zone PZ for the sensor means is provided with a suitable passage opening PO.

In addition, the group can also be provided with means for suctioning the air towards the sensor means, for example a fan or the like V mounted at the sensor means 5.

Moreover, the group 1 can include at least one by-pass or branch section 6c (see figure 14) of the first path 6 as well as at least one directing or interception valve 10a, 10b set to allow or obstruct the flow of air through the by-pass or branch section 6c as well as to obstruct or allow the passage of air through an intermediate portion 6d of the first path 6. In such case, the group 1 also comprises actuator means (not illustrated in the figures) set to move the directing valve so as to vary the free passage section of the by-pass or branch section 6c and the processing unit 8 is set to drive the actuator means as a function of the examined data.

In substance, as a function of the actuation of the directing valve, it is possible to determine or set a first main path 6, including the intermediate portion 6d of the first path 6, or a first auxiliary path, including the by-pass section 6c.

If desired, the directing valve is set to interrupt the passage of air from the second opening to the first opening through the heat exchanger 18 and hence the passage through the heat exchanger 18 of the air conveyed along the first 6 and/or the second 13 path, which can be divided into two levels by the valves 23a and 24a, which will be explained hereinbelow, during entering and expulsion.

Alternatively or in addition to that indicated presently, the group could have valves intended to deflect the flow of air from the third opening to the fourth opening so as to determine or set a second main path passing through the heat exchanger and a second auxiliary path which does not pass through the exchanger.

The directing valve or a directing valve can correspond to the or to a respective interception valve 10a, 10b.

The third path 15 can comprise a third section 15c between the first 15a and second 15b sections, actually corresponding to the by-pass section.

According to the embodiment illustrated in the figures, the containment box or casing includes a base body 20 and a cover 30 removably constrainable to the base body 20. In the base body 20 or in the cover 30, actuation or control buttons 31 or a display 32 could be provided, directed towards the exterior of the casing.

The base body 20 includes a bottom wall 20a as well as one or a plurality of lateral fencing or confining walls 20b-20e projecting upward from the bottom wall 20a or better yet from an edge thereof, if desired a front wall 20b, a rear wall 20c and two lateral walls 20d, 20e set to connect the front wall 20b and the rear wall 20c as a bridge.

The base body 20 then has one or a plurality of intermediate walls, each intended to define, together with the lateral fencing or confining walls 20b-20e, the paths for transmitting or transferring air as well as, if desired, zones for housing components of the group 1.

More particularly, the base body 20 can comprise a series of intermediate walls such to define, together with the bottom wall 20a and with the lateral fencing or confining wall or walls 20b-20e:
- the first path 6 having a first section 6a, if desired, substantially rectilinear in moving away from the second opening 4 or from the front F to the rear R of the group 1 and then a second section 6b in a direction approaching the first opening 3, e.g. tilted or oblique with respect to the rear-front direction;
- a second path 13 having a first segment 13a, if desired substantially rectilinear in moving away from the third opening 9 or from the front F to the rear R of the group and then a second segment 13b in a direction approaching the fourth opening 11, e.g. tilted or oblique with respect to the rear-front direction with tilt opposite the second section 6b.

The two paths 6 and 13 or better yet the second section 6b and the second segment 13b traverse the heat exchanger 18 in a heat exchange relationship with respect to each other, such that the heat exchange is determined for the air currents transported through the first 6 and the second 13 path.

In addition, the base body 20 can comprise a series of intermediate walls such to define, together with the bottom wall 20a and with the lateral fencing or confining wall or walls 20b-20e, a third recirculation path 15 such to allow the passage of air or fluid from the third suction opening 9 to the first introduction opening 3.

Preferably, the third path 15 has sections in common with the first 6 and/or the second 13 path, such that suitable valves are provided for that are set to suitably intercept the paths so as to alternately allow the passage of air, as will be better explained hereinbelow, through the first and the second path or through the third path.

In substance, a group according to the present invention is set and thus can be programmed to allow the passage of air selectively:
- through the first 6 and the second 13 path, in accordance with a first and/or a third operating cycle, or
- through the third path 15 in accordance with a second operating cycle.

For the passage between the first and/or the third operating cycle and the second operating cycle or for the passage from one operating cycle to another operating cycle or for varying the operating conditions of the group, the processing unit, as a function of the data examined, suitably drives respective valves 10a, 10b, 23, 24 for opening/closing the paths 6, 13 and 15.

Alternatively, in particular when the paths do not have sections of ducts of the group in common, for the passage between different operating cycles one could also, alternatively or in addition to the movement of suitable valves, activate suction or thrust means for controlling one or more paths and deactivate other means thereof, for example activating suction or thrust means for conveying air along the third path and deactivating air suction or thrust means along the first and second path, or vice versa.

In addition, the base body 20 can comprise a series of intermediate walls such to define, together with the bottom wall 20a and with the lateral fencing or confining wall or walls 20b-20e, a first and/or second auxiliary path, which does not pass through the heat exchanger 18.

Clearly, the base body 20 is made of a single piece or the walls of the base body 20 are connected to each other so as to be integral and stably constrained to each other.

More particularly, the intermediate walls of the base body 20 include two or three first walls 20f, 20g, 20h extended starting from the front wall 20b and transverse or better yet orthogonal to the bottom wall 20a, each of such first walls 20f, 20g, 20h separating the flow zone of two adjacent openings 4-9, 9-3 or 3-11, i.e. the flow zone from which the air exits by means of an opening 3, 11 or into which the air enters by means of an opening 4, 9.

According to the non-limiting embodiment illustrated in the figures, a first central wall 20g is provided for along with two first lateral walls 20f and 20h, one placed opposite the other with respect to the first central wall 20g.

The first central wall 20g can support or in any case have the end - opposite that constrained to the front wall 20b - at the heat exchanger 18.

A first lateral wall 20f can instead have a substantially rectilinear portion 20f1, substantially parallel to the front F-rear R direction and then branched into two branch wall sections 20f2, 20f3, each terminating with a substantially free end 20f2a and 20f3a, set - as will be better explained hereinbelow - to form an abutment zone of a valve component or of an interception valve.

If desired, a closure wall 20i can be provided that is extended from one branch wall section 20f2 to the other 20f3, and thus delimit a positioning zone PZ for the sensor means 5 or a support circuit board thereof. The passage opening PO, if provided, can be made or delimited by the closure wall 20i.

Advantageously, a first interception valve can include a first shutter component 10a pivoted around an axis substantially parallel to the direction from the bottom wall 20a to the cover 30 on one side 20d or on the first lateral wall 20f and a free end thereof is set to knock or abut against the other from among the first lateral wall 20f and side 20d.

A second lateral wall 20h instead has a first substantially rectilinear section 20h1, substantially parallel to the front F-rear R direction terminating at a distance from the rear wall 20c, then a second wall section 20h2 substantially parallel to the first wall section 20h1 and intermediate between the first wall section 20h1 and the first central wall 20g, and then one or a pair of bridge-like connection sections 20h3, extended less than the first 20h1 and second 20h2 wall section, each extended from one end, upper during use or proximal to the cover 30 of the second wall section 20h2, to an end section, upper during use, of the first section 20h1, in a manner such that between the first wall section 20h1, second wall section 20h2 and bridge-like connection sections 20h3, a passage duct 20h4 is delimited with terminal passage windows W1 and W2 for air.

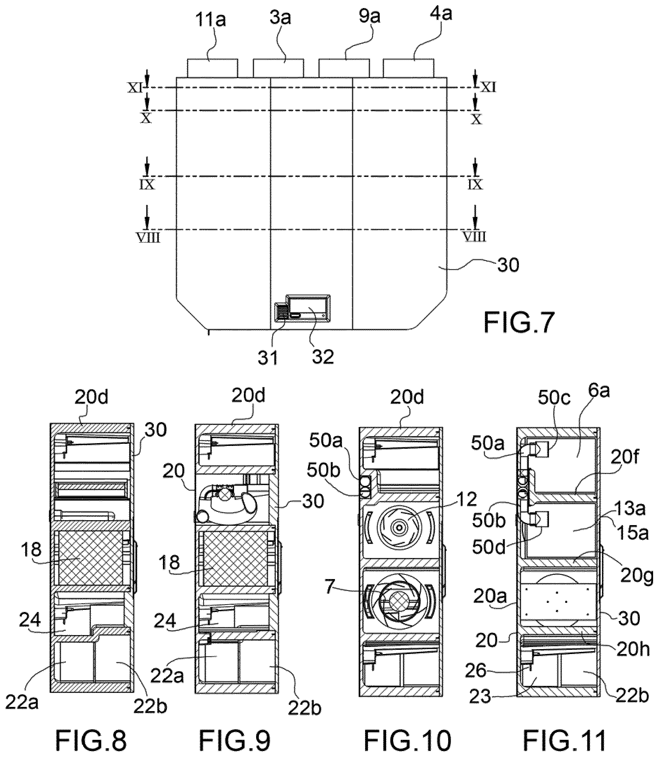

In addition, the group 1 can also have an intermediate flat bed 21 connected or fixed between the lateral fencing or confining wall 20b and a side 20e thereof and the second lateral wall 20h, and such intermediate flat bed 21 is set to delimit a first 22a and a second 22b channel, one, if desired, lower channel 22a between the intermediate flat bed 21 and the bottom wall 20a and the other, if desired, upper channel 22b between the intermediate flat bed 21 and the cover 30 (see in particular figures 8 and 9).

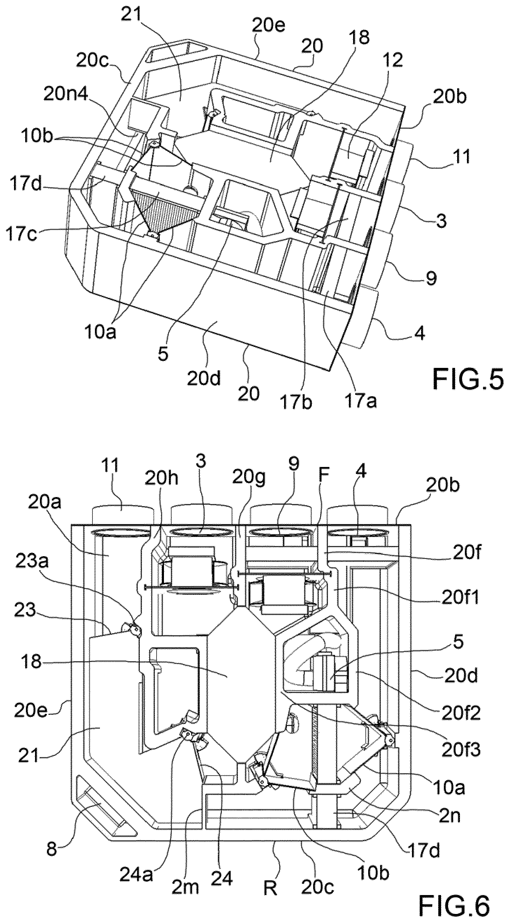

The intermediate walls of the base body 20 can also include a first wall section that is curved or with multiple tilted segments 20m which is extended from the rear wall 20c, which can have a first segment 20m1 aligned along the rear R-front F direction, then a second segment 20m2 transverse to the first segment 20m1 and, if desired, a third segment 20m3 which is extended from the segment 20m2 and supports or in any case has the end opposite the second segment 20m2 at the heat exchanger 18. The first segment 20m1 can delimit a passage opening for air 20m4 (see figure 5) in fluid communication with the first channel 22a.

In such case, the group can comprise valves, for example opening-closing walls for the ends of the second channel 22a, e.g. two opening-closing walls, and such opening-closing walls 23, 24 can be pivoted around an axis 23a, 24a, if desired substantially parallel to the direction from the bottom wall 20a to the cover 30. The group then includes angular movement means (for example an electric motor or a motor of another type) for moving the opening-closing walls 23, 24, which are set to move the walls 23, 24 so as to open-close a respective end of the second channel 22a.

More particularly, a first closure wall 23 is set to open/close one end of the second channel 22a proximal to the fourth opening 11 and delimited between the intermediate flat bed 21, the side 20e and the second lateral wall 20h.

A second closure wall 24 is instead set to open/close one end of the second channel 22a leading to a window W1.

A third closure wall or the second closure wall is then set to open/close one end of the first channel 22a in fluid communication with a section of a path, in particular the second path 13, after traversing the heat exchanger 18 or the housing zone of the heat exchanger 18. According to the embodiment illustrated in the figures, the second closure wall 24 is movable between a first position in which it closes the first window W1 and opens the fluid communication of the first channel 22a with the heat exchanger 18 and a second position in which it opens the first window W1 and closes the fluid communication of the first channel 22a with the heat exchanger 18.

The group 1 can then be provided with end stop means 26 for the opening-closing wall(s) 23, 24, for example a strip or the like projecting upward from a wall of the base body 20 and against which the opening-closing wall abuts in one of the respective final or terminal positions.

Alternatively, the motor for actuating the opening-closing wall 23-24 can be provided with components for limiting or controlling the movement of the opening-closing wall(s).

According to the non-limiting embodiment illustrated in the figures, the intermediate flat bed 21 is extended with continuity between a side 20e and the second lateral wall 20h up to the bridge-like connection section 20h3 distal from the front wall 20b and proximal to the rear wall 20c and to the wall section with multiple tilted segments 20m.

The intermediate flat bed 21 can be provided at a height or level corresponding or substantially corresponding to the upper end or end distal from the bottom wall 20a of the windows W1, W2 and of the opening 20m4 or in any case in a manner such that air conveyed through the windows W1, W2 or the opening 20m4 passes into the first channel 22a or vice versa.

Preferably, a second interception valve can include a second shutter component 10b pivoted around a vertical axis or around an axis substantially parallel to the direction from the bottom wall 20a to the cover 30 on the first wall section that is curved or with multiple tilted segments 20m or on the first lateral wall 20f and a free end thereof is set to knock or abut against the other from among the first lateral wall 20f and first wall section that is curved or with multiple tilted segments 20m.

The intermediate walls of the base body 20 can also include a second wall section that is curved or with multiple tilted segments 20n, which is extended at the rear wall 20c and spaced therefrom.

The group 1 can preferably include a third filter 17c between the second wall section that is curved or with multiple tilted segments 20n and the first lateral wall 20f or the closure wall 20i and, if desired, a fourth filter 17d between the second wall section that is curved or with multiple tilted segments 20n and the rear wall 20c.

Still according to such variant, the first shutter component 10a is set to knock or abut in a first position against the second wall section that is curved or with multiple tilted segments 20n, in order to carry out a first or third operating cycle, and knock or abut in a second position against the first lateral wall 20f or the side 20d in order to carry out a second operating cycle for recycling, such that in the first position it opens the fluid communication between the second opening 4 and the third filter 17c, while in the second position it opens the fluid communication between the third 17c and the fourth 17d filter.

In accordance with such variant, the second shutter component 10b is set to knock or abut in a first position against the second wall section that is curved or with multiple tilted segments 20n and knock or abut in a second position against the first lateral wall 20f or the first wall section that is curved or with multiple tilted segments 20m, such that in the first position it opens the fluid communication between the heat exchanger and the housing zone of the third filter 17c and in the second position it interrupts such communication.

If desired, the group also comprises a germicide lamp 17e placed between the third filter 17c and the heat exchanger 18, more particularly in the zone between the third filter 17c and the pivoting zone of the second shutter component 10b.

The processing unit 8 can have one or more of the following components:
- a first element 8a for controlling the first suction or thrust means 7;
- a second element 8b for controlling the second suction or thrust means 12;
- a third or additional element 8c for controlling the motors;
- an outlet 8d for connecting, if desired by means of cable or WIFI, with the sensor means;
- an Ethernet port 8e;
- a USB port 8f;
- a data processing processor 8g;
- a WI-FI module 8h; and
- a power outlet 8i.

Another object of the present invention is an apartment or building delimiting one or more controlled environments as well as a group 1 as described above, installed and connected to pipes or ducts for dispensing and suctioning air between the group and the environment and between the group and the outside.

With a group according to the present invention or in any case in accordance with a method for the analysis and control of the ventilation of at least one internal environment or first environment with a group according to the present invention, after having connected the openings 3, 4, 9 and 11 to respective ducts in fluid communication with an internal environment or with an external environment, in order to start the operation, the air flows are started, hence the suction or thrust means 7, 12, and then a detection or a scanning of data of the sensor means 5 is carried out and the data detected by the sensors is transmitted to the processing unit 8.

The processing unit 8 then, according to an automatic operating mode, processes the data received from the sensor means 5 and as a function of the examined data consequently sets an operating cycle of the group.

Preferably, the processing unit 8 receives and processes the data received from the sensor means 5 continuously, i.e. with a detecting period or interval ranging between 5 seconds and one minute, or between 5 and 25 seconds or between 10 and 20 seconds, if desired about each 15 seconds.

Alternatively, in accordance with a direct import mode, if desired settable directly by a user, the by-pass of the exchanger 18 is activated, such that the air is filtered and introduced directly at outside temperature into an internal environment.

In addition, the processing unit can be interfaced by means of Ethernet, Wi-Fi, USB, by means of remote control or directly, and it is possible to display the reading data detected over time from the internal or external environment(s). In addition, with an application on updated computing systems, it is possible to generate graphs, save and share the date with other users, as well as vary the settings and the parameters of calculation and work and/or create graphs regarding the progression of the air quality or quality of other fluids or liquids, detected in the external and/or internal environments over the desired or requested time period.

Preferably, a group according to the present invention can be actuated according to different working cycles or operating cycles.

In accordance with a first working cycle or in a condition of normal ventilation (see figure 12), the internal air is substituted and/or admixed with air coming from the outside, possibly filtered.

During such cycle, preferably, air is suctioned from the outside and introduced into the internal environment or environments along the first transmission or transfer path 6 from the second opening 4 to the first opening 3 and air is suctioned from the interior and is introduced into the external environment along the second transmission or transfer path 13 from the third opening 9 to the fourth opening 11.

In accordance with the non-limiting embodiment illustrated in the figures, in order to arrange the group in operating conditions according to the first cycle:
- the first shutter component 10a is in a first position in which it opens the fluid communication between the second opening 4 and the housing zone of the heat exchanger 18, upon possible passage through the filter 17c,
- the second shutter component 10b is in the first position, in which it opens the fluid communication between the heat exchanger 18 and the housing zone of the third filter 17c,
- the first closure wall 23 is in an open position for the respective end of the second channel 22a;
- the second closure wall 24 is in an open position for the fluid communication between the first channel 22a and the heat exchanger 18 or central zone of the group or housing zone of the heat exchanger 18.

Then, the processing unit sets the air suction cycle from the outside with possible passage into the heat exchanger, which can also act as dehumidifier, which allows a final recovery even up to 98%.

If, for example CO₂, VOC and other parameters are low and thus deemed optimal for the user, and energy savings is set, the group could be turned off for example for an hour, then possibly being automatically reactivated by starting a control cycle; the stop time can be modified as desired. The system can also be manually started, in any case activating the scanning of the air in the various environments.

With this cycle, there is the absence or a high reduction of dust in the air introduced into the internal environment, as well as an optimal humidity and oxygenation for the user.

In accordance with a second cycle or in conditions of ventilation during recycling (see figure 13), the internal air is filtered and introduced back into the internal environment after having been filtered, possibly also eliminating molds and odors from the activated carbon filter.

During such cycle, preferably, air is suctioned from the interior and introduced or reintroduced into the internal environment or environments along the third path 15 from the third opening 9 to the first opening 3.

In accordance with the non-limiting embodiment illustrated in the figures, in order to arrange the group in operating conditions in accordance with the second cycle:
- the first shutter component 10a is in a second position in which it closes the fluid communication between the second opening 4 and the housing zone of the heat exchanger 18,
- the second shutter component 10b is in the first position, in which it opens the fluid communication between the heat exchanger 18 and the housing zone of the third filter 17c,
- the first closure wall 23 is in a closed position for the respective end of the second channel 22a;
- the second closure wall 24 is in an open position for the fluid communication between the first channel 22a and the heat exchanger 18 or central zone of the group or housing zone of the heat exchanger 18.

The second cycle is activated when the external air is loaded with pollutant agents, such as PM10, PM2.5, PM0.1, benzene or VOC in general, a condition which is only verified at some times of the day; in longer time periods, the level of the internal CO₂ is monitored.

Possibly, during such cycle it is possible to suction air from the outside and filter it in order to then introduce it into the internal environment.

Having considered the cost of the filters and their duration, the cycle for reopening the flows at normal conditions is reduced, so as to optimize the internal environment and possibly the duration of the filters.

The recycling cycle is not affected by temperature differences.

In accordance with a third cycle or in direct ventilation conditions (see figure 14), the air is introduced directly into the internal environment after having been filtered without passage through the heat exchanger, preserving temperature and humidity (ideal for the ventilation on summer nights).

During such cycle, preferably, air is suctioned from the outside and introduced into the internal environment or environments along the first transmission or transfer path 6 from the first opening 3 to the second opening 4, passing through the by-pass section 6c and air is suctioned from the interior and is introduced into the external environment along the second auxiliary transmission or transfer path 13 from the third opening 9 to the fourth opening 11.

In accordance with the non-limiting embodiment illustrated in the figures, in order to arrange the group in operating conditions according to the first cycle:
- the first shutter component 10a is in a first position in which it opens the fluid communication between the second opening 4 and the housing zone of the heat exchanger 18, upon possible passage through the filter 17c,
- the second shutter component 10b is in the second position, in which it closes the fluid communication between the heat exchanger 18 and the housing zone of the third filter 17c,
- the first closure wall 23 is in a closed position for the respective end of the second channel 22a;
- the second closure wall 24 is in a closed position for the fluid communication between the first channel 22a and the heat exchanger 18 or the central zone of the group or housing zone of the heat exchanger 18.

Such cycle can be activated when requested by the user or when during summer the internal temperature exceeds a preset value relative to the external temperature.

Hence the exchanger is excluded and the introduced air lowers the temperature of the internal environment in a natural manner.

In substance, with a group according to the present invention, the data read by the sensor means, divided into internal and external air data reading block, is sent to the management station or processing unit, which processes the information received from the sensors station and from possible remote sensors, optimizing or modifying the air flows, regulating the air flows thereof or isolating the environments if the conditions are unfavorable.

When, for example, a high level of pollution of the external air is detected, and the values of oxygen, CO₂ and radon in the internal environment are optimal, then the processing unit can block the suction of air from the outside and continue to filter the internal air, eliminating molds, bacteria and VOC by means of filters, e.g. high capacity, or with a germicide lamp.

When instead the levels of CO₂ or of oxygen in the internal environment are no longer acceptable or when the external air has improved, the introduction of air from the outside is reactivated, suitably filtering such air so as to eliminate impurities, if desired up to sizes corresponding to PM0.3/0.1.

In the processing unit, optimal values are set for the internal environment, for example values indicated by law.

The values can be modified by the user by increasing or decreasing the characteristics and the reference parameters, so to be able to use the group even in rooms for food maturation, food processing or sterilization.

Moreover, as indicated above, it is possible to use the direct ventilation mode, which imports filtered air directly from the exterior and bypasses the heat exchanger, which is useful in the periods when the external temperature is preferred to that internal, such as in the spring or during summer nights. In any case, air continues to be extracted from the interior and the air quality is always monitored.

According to one variant, the processing unit 8 can be set in a manner such that if low values of CO₂ are detected, for example there are no users in the internal environment or room windows have been opened, then the group is arranged in energy savings mode, so that it can deactivate the functions for analysis and control.

In addition, by setting specific work data, the group can also be used in warehouses or environments for the maturation or processing of foods, such as cheeses or salami, preserving the optimal characteristics of the maturation setting and ensuring the quality of the introduced air in equilibrium with the evolution of the maturation or preservation of the product in the environment.

As can be inferred, a group according to the present invention forms a system of mechanical ventilation for environments which has a processing unit or station capable of continuously examining the values in the internal and external environment, thus automatically setting the option of management of the optimal ventilation for the user in the internal environment.

A group according to the present invention is able to establish when and how to set the ventilation, simultaneously ensuring the heat recovery needs and purifying the air so as improve it, and allowing the verification of the air quality.

Of course, this concept can be adapted to single-room settings or large environments or buildings such as hospitals, exhibition centers, factories or moving means such as trains, buses, cars, etcetera.

With reference now to EP1962030A1, the same does not teach a group for air analysis and control as provided for according to the present invention, when considering that such prior document is only focused on the detection of air temperature and it is not based at all on the detection of the quality of air, and indeed in the above-mentioned European patent application no sensor, such as CO2, oxygen or particulate sensor is provided to this regards.

It will also be noted that the group of such prior document is not equipped with filters of air drawn both from the internal environment and from the external environment, thus such group does neither ensure that air suctioned is sufficiently pure for being safely used, nor a reliable overall monitoring.

Many other differences among the group subject-matter of the present invention and that of EP1962030A1 occur, such as for example the by-pass or branch section 6c and the times of control or detection by means of the processing unit 8.

Modifications and variations of the invention are possible within the protected scope defined by the claims.

## Claims

1. Group for analysis and control of the ventilation of at least one internal environment or first environment, comprising:
- a containment box or casing (2),
- at least one first opening (3) for introducing a fluid or air in an internal environment or first environment,
- at least one second opening (4) for suctioning or drawing a fluid or air from an external environment or second environment,
- sensor or examination means (5) for the fluid or air suctioned from said at least one second opening (4), wherein said sensor or examination means (5) are arranged to detect the quality of air or the fluid suctioned from said at least one second opening (4) or the presence as well as the value of compounds in the air or fluid suctioned from said at least one second opening (4),
said containment box or casing (2) delimiting at least one first path (6) of fluid or air transmission or transfer from said at least one first opening (3) to said at least one second opening (4),
said group also comprising
- first means (7) for suctioning or thrusting fluid or air along said at least one first path (6) set for conveying a fluid or air from said at least one first opening (3) to said at least one second opening (4), and
- at least one processing unit (8) set to receive first data pertaining to the fluid or air of an external environment or second environment from said sensor or examination means (5), as well as examine said first data, so as to consequently drive said first means for suctioning or thrusting (7) and/or means for actuating at least one valve (10a, 10b) of intercepting said first path (6) as a function of the first examined data, in a manner such to regulate or allow/obstruct the flow of fluid or air through said at least one first path (6) from said at least one first opening (3) to said at least one second opening (4),
said group further comprising at least one third opening (9) for suctioning or drawing fluid or air from said at least one internal environment or first environment and sensor or examination means for the fluid or air suctioned from said at least one third opening (9), wherein said sensor or examination means (5) are arranged to detect the quality of air or the fluid in the internal environment or suctioned from said at least one third opening (9) or the presence as well as the value of compounds in the air or fluid in said internal environment or suctioned from said at least one third opening (9).
said at least one processing unit (8) being set to receive second data pertaining to the fluid or air of said at least one internal environment from said sensor means (5), as well as to examine said second data, so as to drive said first means for suctioning or thrusting (7) and/or means for actuating at least one valve of intercepting said at least one first path (6) as a function of said first and said second examined data,
said group further comprising at least one fourth opening (11) for expelling fluid or air into said external environment or second environment and second means for suctioning or thrusting fluid or air (12),
wherein said containment box or casing (2) delimits at least one second path (13) for transmitting or transferring fluid or air from said at least one third opening (9) to said at least one fourth opening (11),
wherein said second suction or thrust means for suctioning or thrusting fluid or air (12) are set to convey fluid or air from said at least one third opening (9) to said at least one fourth opening (11), and
wherein said at least one processing unit (8) is set to drive said second means for suctioning or thrusting fluid or air (12) and/or second means for actuating a valve of intercepting said at least one second path (13) as a function of said examined data.

2. Group according to claim 1, wherein said sensor or examination means (5) are set to detect the presence as well as the value of one or more of the following compounds: CO₂, oxygen, particulate formed by particles with diameter less than 10 µm, particulate formed by particles with diameter less than 2.5 µm, particulate formed by particles with diameter less than 0.3/0.1 µm, volatile organic compounds and/or radon.

3. Group according to claim 2, wherein said sensor or examination means comprises one or more of the following sensors:
- a CO₂ sensor (5a) including an infrared sensor with spectra filter;
- an oxygen sensor (5b) including an infrared sensor;
- a particulate sensor (5c) including an optical counter of particles with OPC pulses;
- a volatile organic compounds or VOC sensor (5d) including an electrochemical sensor diffused in the room, redox with electrolytic melting.

4. Group according to any one of the preceding claims, comprising at least one valve (10a, 10b) of intercepting said path (6, 13) and means for actuating said at least one valve of intercepting (10a, 10b) set to move said at least one valve of intercepting (10a, 10b) so as to vary the free passage section of said path (6, 13), wherein said at least one processing unit (8) is set to drive said actuation means as a function of said examined data.

5. Group according to claim 3 or 4 when depending upon claim 3, comprising at least one valve component and means for displacing said at least one valve component,
wherein said containment box or casing (2) delimits at least one third path (15) for transmitting or transferring fluid or air from said at least one third opening (9) to said at least one first opening (3),
wherein said at least one valve component is set to allow or obstruct or prevent the passage of fluid through said at least one third path (15), and
wherein said at least one processing unit (8) is set to drive said means for displacing as a function of said examined data.

6. Group according to claim 5, wherein said at least one third path (15) comprises, from an inlet end to an outlet end, a first section (15a) corresponding to an initial section of said at least one second path (13) and a second section (15b) corresponding to a terminal section of said at least one first path (6).

7. Group according to any one of the preceding claims when depending upon claims 3 and 5, wherein said group is arranged and settable so as to allow the passage of fluid or air selectively:
- through said first (6) and said second (13) path, in accordance with a first and/or a third operating cycle, or
- through said third path (15) in accordance with a second operating cycle.

8. Group according to claim 7, wherein said processing unit (8) is set to drive, as a function of said examined data, respective valves (10a, 10b, 23, 24) for opening/closing said paths (6, 13, 15) and/or means for suctioning or thrusting (7, 12) fluid or air along said paths (6, 13, 15) for the passage from said first and/or third operating cycle to said second operating cycle or vice versa.

9. Group according to any one of the preceding claims, comprising means (17a, 17b, 17c, 17d, 17e) for filtering or purifying the fluid or air set along said at least one path of transmission or transfer (6, 13, 15).

10. Group according to claim 9, wherein said filtering or purification means (17a, 17b, 17c, 17d, 17e) include active carbons and/or a germicide lamp and/or H14, F8, F9 filters and/or air filters with high particulate efficiency.

11. Group according to any one of the preceding claims when depending upon claim 3, comprising at least one heat exchanger (8) intercepting said at least one first (6) and said at least one second (13) path and set to allow the heat exchange between the fluid or air conveyed through said at least one first path (6) and the fluid or air conveyed through said at least one second path (13).

12. Group according to any one of the preceding claims when depending upon claim 3, comprising at least one by-pass or branch (6c) section of said first (6) and/or said second (13) path as well as at least one directing or intercepting valve (10a, 10b) set to allow or obstruct the flow of fluid or air through said by-pass or branch section (6c) as well as to allow or obstruct the passage of fluid or air through an intermediate portion (6d) of said first (6) and/or second (13) path, said group further comprising actuator means set to move said at least one directing or intercepting valve (10a, 10b) so as to vary the free passage section of said by-pass or branch section (6c), wherein said at least one processing unit (8) is set to drive said actuator means as a function of said examined data, such that it is possible to determine or set a first and/or second main path including said intermediate portion (6d) or a first and/or second auxiliary path including said by-pass section (6c).

13. Group according to claims 11 and 12, wherein said at least one directing or valve or valve of intercepting (10a, 10b) is set to interrupt the passage through said heat exchanger (18) of the fluid or air conveyed along said first (6) and/or second (13) path.

14. Group according to claim 12 or 13 and any one of the preceding claims when depending upon claim 6, wherein said third path (15) comprises a third section (15c) between said first (6) and said second (13) section corresponding to said by-pass section (6c).

15. Group according to any one of the preceding claims, wherein said processing unit (8) receives and processes the data received from the sensor means (5) with a detecting period or interval ranging between 5 seconds and one minute, or between 5 and 25 seconds or between 10 and 20 seconds.

16. Group according to any one of the preceding claims when depending upon claim 2, comprising at least one first duct (50a) in fluid communication with said at least one second opening (4) and set to convey fluid or air from said at least one second opening (4) to said sensor means (5) and at least one second duct (50b) in fluid communication with said at least one third opening (9) and set to convey fluid or air from said at least one third opening (9) to said sensor means (5), said at least one first (50a) and said at least one second (50b) duct leading to a same sensor means or to a same duct leading to the same unit or sensor means (5) and being intercepted by means of a respective first (VI) and second (V2) valve actuatable by a motor (M) controlled by the processing unit (8) or remotely or manually.

17. Group according to claim 16, wherein said valves (VI and V2) are actuatable by a same motor (M), said motor (M) being set to actuate a shaft (S) set to control said valves (VI and V2) such that by controlling the movement of said first valve (VI) from a closed position of the respective duct (50a) to an open position of the same duct or in any case by controlling a movement of said first valve (VI) so as to increase the free passage section of said first duct (50a), the movement of said second valve (V2) is determined from an open position of the respective duct (50b) to a closed position thereof or in any case a movement of said second valve (V2) is controlled so as to decrease the free passage section of said second duct (50b) and vice versa.

18. Method for analysis and control of the ventilation of at least one internal environment or first environment with a group according to any one of the preceding claims, comprising the following steps:
- connecting said openings (3, 4, 9 and 11) to respective ducts in fluid communication with a respective internal environment or external environment;
- carrying out a detection of data by said sensor means (5) and transmitting them to said at least one processing unit (8);
- processing, by means of said at least one processing unit (8), the data received by said sensor means (5) and as a function of said examined data consequently setting an operating cycle of said group.

19. Method according to claim 18, wherein said processing unit (8) processes the data received from the sensor means (5) and as a function of said examined data consequently sets an operating cycle of said group so as to allow the passage of fluid or air:
- through said first (6) and said second (13) path, in accordance with a first and/or third operating cycle, or
- through said third path (15) in accordance with a second operating cycle.

20. Method according to claim 18 or 19, wherein said processing unit (8) drives, as a function of said examined data, respective valves (10a, 10b, 23, 24) for opening/closing said paths (6, 13, 15) and/or means (7, 12) for suctioning or thrusting fluid or air along said paths (6, 13, 15) for the passage from one operating cycle of said group to another operating cycle of said group or in order to vary the operating conditions of said group.

## Patentansprüche

1. Gruppe zur Analyse und Steuerung der Belüftung von mindestens einer Innenumgebung oder ersten Umgebung, umfassend:
- einen Aufnahmebehälter oder ein Gehäuse (2),
- mindestens eine erste Öffnung (3) zum Einführen eines Fluids oder von Luft in eine Innenumgebung oder erste Umgebung,
- mindestens eine zweite Öffnung (4) zum Ansaugen oder Ziehen einer Flüssigkeit oder von Luft aus einer Außenumgebung oder zweiten Umgebung,
- Sensor- oder Untersuchungsmittel (5) für das Fluid oder die Luft, die aus der besagten mindestens einen zweiten Öffnung (4) angesaugt werden, worin die besagten Sensor- oder Untersuchungsmittel (5) eingestellt sind, um die Qualität der Luft oder des Fluids, die aus der besagten mindestens einen zweiten Öffnung (4) angesaugt werden, oder das Vorhandensein sowie den Wert von Verbindungen in der Luft oder dem Fluid, die aus der mindestens einen zweiten Öffnung (4) angesaugt werden, zu erfassen,
wobei der besagte Aufnahmebehälter oder das besagte Gehäuse (2) mindestens einen ersten Pfad (6) der Fluid- oder Luftübertragung oder -überführung von der besagten mindestens einen ersten Öffnung (3) zu der besagten mindestens einen zweiten Öffnung (4) begrenzt,
die besagte Gruppe ebenfalls umfassend
- erste Mittel (7) zum Ansaugen oder Schieben von Fluid oder Luft entlang des mindestens einen ersten Pfades (6), der zum Fördern eines Fluids oder von Luft von der besagten mindestens einen ersten Öffnung (3) zu der besagten mindestens einen zweiten Öffnung (4) eingestellt ist, und
- mindestens eine Verarbeitungseinheit (8), die so eingestellt ist, dass sie erste Daten über das Fluid oder die Luft einer Außenumgebung oder zweiten Umgebung von den besagten Sensor- oder Untersuchungsmitteln (5) empfängt, sowie die besagten ersten Daten untersucht, um folglich die besagten ersten Mittel zum Ansaugen oder Schieben (7) und/oder Mittel zum Betätigen mindestens eines Ventils (10a, 10b) zum Unterbrechen des besagten ersten Pfades (6) in Abhängigkeit von den ersten untersuchten Daten in einer derartigen Weise zu steuern, dass der Fluss von Fluid oder Luft durch den besagten mindestens einen ersten Pfad (6) von der besagten mindestens einen ersten Öffnung (3) zu der besagten mindestens einen zweiten Öffnung (4) geregelt oder erlaubt/verhindert wird,
die besagte Gruppe ferner umfassend mindestens eine dritte Öffnung (9) zum Ansaugen oder Ziehen von Fluid oder Luft aus der besagten mindestens einen Innenumgebung oder ersten Umgebung und Sensor- oder Untersuchungsmittel für das Fluid oder die Luft, die aus der besagten mindestens einen dritten Öffnung (9) angesaugt werden, worin die besagten Sensor- oder Untersuchungsmittel (5) eingestellt sind, um die Qualität der Luft oder des Fluids, die in der Innenumgebung sind oder aus der besagten mindestens einen dritten Öffnung (9) angesaugt werden, oder das Vorhandensein sowie den Wert von Verbindungen in der Luft oder dem Fluid, die in der besagten Innenumgebung sind oder aus der besagten mindestens einen dritten Öffnung (9) angesaugt werden, zu erfassen,
wobei die besagte mindestens eine Verarbeitungseinheit (8) so eingestellt ist, dass sie zweite Daten über das Fluid oder die Luft der besagten mindestens einen Innenumgebung von den besagten Sensormitteln (5) empfängt und die besagten zweiten Daten untersucht, um die besagten ersten Mittel zum Ansaugen oder Schieben (7) und/oder Mittel zum Betätigen mindestens eines Ventils zum Unterbrechen des besagten mindestens einen ersten Pfades (6) in Abhängigkeit von den besagten ersten und den besagten zweiten untersuchten Daten zu steuern,
die besagte Gruppe ferner umfassend mindestens eine vierte Öffnung (11) zum Ausstoßen von Fluid oder Luft in die besagte Außenumgebung oder zweite Umgebung und zweite Mittel zum Ansaugen oder Schieben von Fluid oder Luft (12),
worin der besagte Aufnahmebehälter oder das besagte Gehäuse (2) mindestens einen zweiten Pfad (13) zum Übertragen oder Überführen von Fluid oder Luft von der besagten mindestens einen dritten Öffnung (9) zu der besagten mindestens einen vierten Öffnung (11) begrenzt,
worin die besagten zweiten Saug- oder Schubmittel zum Ansaugen oder Schieben von Fluid oder Luft (12) eingestellt sind, um Fluid oder Luft von der besagten mindestens einen dritten Öffnung (9) zu der besagten mindestens einen vierten Öffnung (11) zu fördern, und worin die besagte mindestens eine Verarbeitungseinheit (8) eingestellt ist, um die besagten zweiten Mittel zum Ansaugen oder Schieben von Fluid oder Luft (12) und/oder zweite Mittel zum Betätigen eines Ventils zum Unterbrechen des besagten mindestens einen zweiten Pfades (13) in Abhängigkeit von den besagten untersuchten Daten zu steuern.

2. Gruppe nach Anspruch 1, worin die besagten Sensor- oder Untersuchungsmittel (5) eingestellt sind, um das Vorhandensein sowie den Wert einer oder mehrerer der folgenden Verbindungen zu erfassen: CO₂, Sauerstoff, Schwebstoff, der durch Partikel mit einem Durchmesser von weniger als 10 µm gebildet wird, Schwebstoff, der durch Partikel mit einem Durchmesser von weniger als 2,5 µm gebildet wird, Schwebstoff, der durch Partikel mit einem Durchmesser von weniger als 0,3/0,1 µm gebildet wird, flüchtige organische Verbindungen und/oder Radon.

3. Gruppe nach Anspruch 2, worin das besagte Sensor- oder Untersuchungsmittel einen oder mehrere der folgenden Sensoren umfasst:
- einen CO₂-Sensor (5a) mit einem Infrarotsensor mit Spektralfilter;
- einen Sauerstoffsensor (5b) mit einem Infrarotsensor;
- einen Schwebstoffsensor (5c) mit einem optischen Zähler von Partikeln mit OPC-Impulsen;
- ein Sensor für flüchtige organische Verbindungen oder VOC (5d) mit einem in den Raum diffundierten elektrochemischen Sensor, Redox mit elektrolytischem Schmelzen.

4. Gruppe nach irgendeinem der vorangegangenen Ansprüche, umfassend mindestens ein Ventil (10a, 10b) zum Unterbrechen des besagten Pfades (6, 13) und Mittel zum Betätigen des besagten mindestens einen Ventils zum Unterbrechen (10a, 10b), die zum Bewegen des besagten mindestens einen Ventils zum Unterbrechen (10a, 10b) eingestellt sind, um den freien Durchgangsabschnitt des besagten Pfades (6, 13) zu variieren, worin die besagte mindestens eine Verarbeitungseinheit (8) eingestellt ist, um die besagten Betätigungsmittel in Abhängigkeit von den besagten untersuchten Daten zu steuern.

5. Gruppe nach Anspruch 3 oder 4, wenn abhängig von Anspruch 3, umfassend mindestens eine Ventilkomponente und Mittel zum Verschieben der besagten mindestens einen Ventilkomponente,
worin der besagte Aufnahmebehälter oder das besagte Gehäuse (2) mindestens einen dritten Pfad (15) zum Übertragen oder Überführen von Fluid oder Luft von der besagten mindestens einen dritten Öffnung (9) zu der besagten mindestens einen ersten Öffnung (3) begrenzt, worin die besagte mindestens eine Ventilkomponente eingestellt ist, um den Durchgang von Fluid durch den besagten mindestens einen dritten Pfad (15) zu erlauben oder zu verhindern oder zu vermeiden, und
worin die besagte mindestens eine Verarbeitungseinheit (8) eingestellt ist, um die besagten Mittel zum Verschieben in Abhängigkeit von den besagten untersuchten Daten zu steuern.

6. Gruppe nach Anspruch 5, worin der besagte mindestens eine dritte Pfad (15) von einem Einlassende zu einem Auslassende einen ersten Abschnitt (15a), der einem Anfangsabschnitt des besagten mindestens einen zweiten Pfades (13) entspricht, und einen zweiten Abschnitt (15b), der einem Endabschnitt des besagten mindestens einen ersten Pfades(6) entspricht, umfasst.

7. Gruppe nach irgendeinem der vorangegangenen Ansprüche, wenn abhängig von den Ansprüchen 3 und 5, worin die besagte Gruppe so angeordnet und einstellbar ist, dass sie den selektiven Durchgang von Fluid oder Luft erlaubt:
- durch den besagten ersten (6) und den besagten zweiten (13) Pfad, in Übereinstimmung mit einem ersten und/oder einem dritten Arbeitszyklus, oder
- durch den besagten dritten Pfad (15) in Übereinstimmung mit einem zweiten Arbeitszyklus.

8. Gruppe nach Anspruch 7, worin die besagte Verarbeitungseinheit (8) eingestellt ist, um in Abhängigkeit von den besagten untersuchten Daten entsprechende Ventile (10a, 10b, 23, 24) zum Öffnen/Schließen der besagten Pfade (6, 13, 15) und/oder Mittel zum Ansaugen oder Schieben (7, 12) von Fluid oder Luft entlang der besagten Pfade (6, 13, 15) für den Übergang von dem besagten ersten und/oder dritten Arbeitszyklus zum besagten zweiten Arbeitszyklus oder umgekehrt zu steuern.

9. Gruppe nach irgendeinem der vorangegangenen Ansprüche, umfassend Mittel (17a, 17b, 17c, 17d, 17e) zum Filtern oder Reinigen des Fluids oder der Luft, die entlang des besagten mindestens einen Übertragungs- oder Überführungspfades(6, 13, 15) eingestellt sind.

10. Gruppe nach Anspruch 9, worin die besagten Filter- oder Reinigungsmittel (17a, 17b, 17c, 17d, 17e) Aktivkohlen und/oder eine Germizidlampe und/oder H14-, F8-, F9-Filter und/oder Luftfilter mit hohem Schwebstoff-Wirkungsgrad enthalten.

11. Gruppe nach irgendeinem der vorangegangenen Ansprüche, wenn abhängig von Anspruch 3, umfassend mindestens einen Wärmetauscher (8), der den besagten mindestens einen ersten (6) und den besagten mindestens einen zweiten (13) Pfad unterbricht und eingestellt ist, um den Wärmeaustausch zwischen dem Fluid oder der Luft, die durch den besagten mindestens einen ersten Pfad (6) gefördert werden, und dem Fluid oder der Luft, die durch den besagten mindestens einen zweiten Pfad(13) gefördert werden, zu erlauben.

12. Gruppe nach irgendeinem der vorangegangenen Ansprüche, wenn abhängig von Anspruch 3, umfassend mindestens einen Bypass- oder Zweigabschnitt (6c) des besagten ersten (6) und/oder des besagten zweiten (13) Pfades sowie mindestens ein Richt- oder Unterbrechungsventil (10a, 10b), das eingestellt ist, um den Fluss von Fluid oder Luft durch den besagten Bypass- oder Zweigabschnitt (6c) zu erlauben oder zu verhindern sowie den Durchgang von Fluid oder Luft durch einen Zwischenabschnitt (6d) des besagten ersten (6) und/oder zweiten (13) Pfades zu erlauben oder zu verhindern, wobei die besagte Gruppe ferner Aktuatormittel umfasst, die zum Bewegen des besagten mindestens einen Richt- oder Unterbrechungsventil (10a, 10b) eingestellt sind, um den freien Durchgangsabschnitt des besagten Bypass- oder Zweigabschnittes (6c) zu variieren, worin die besagte mindestens eine Verarbeitungseinheit (8) eingestellt ist, um die besagten Aktuatormittel in Abhängigkeit von den besagten untersuchten Daten zu steuern, sodass es möglich ist, einen ersten und/oder zweiten Hauptpfad, der den besagten Zwischenabschnitt (6d) enthält, oder einen ersten und/oder zweiten Hilfspfad, der den besagten Bypassabschnitt (6c) enthält, zu bestimmen oder einzustellen.

13. Gruppe nach den Ansprüchen 11 und 12, worin das besagte mindestens eine Richtventil oder Unterbrechungsventil (10a, 10b) zum Unterbrechen des Durchgangs durch den besagten Wärmetauscher (18) des Fluids oder der Luft, die entlang des besagten ersten (6) und/oder zweiten (13) Pfades gefördert werden, eingestellt ist.

14. Gruppe nach Anspruch 12 oder 13 und irgendeinem der vorangegangenen Ansprüche, wenn abhängig von Anspruch 6, worin der besagte dritte Pfad (15) einen dritten Abschnitt (15c) zwischen dem besagten ersten (6) und dem besagten zweiten (13) Abschnitt entsprechend dem besagten Bypassabschnitt (6c) umfasst.

15. Gruppe nach irgendeinem der vorangegangenen Ansprüche, worin die besagte Verarbeitungseinheit (8) die von den Sensormitteln (5) empfangenen Daten mit einer Erfassungsperiode oder einem Erfassungsintervall im Bereich zwischen 5 Sekunden und einer Minute oder zwischen 5 und 25 Sekunden oder zwischen 10 und 20 Sekunden empfängt und verarbeitet.

16. Gruppe nach irgendeinem der vorangegangenen Ansprüche, wenn abhängig von Anspruch 2, umfassend mindestens einen ersten Kanal (50a) in Fluidverbindung mit der besagten mindestens einen zweiten Öffnung (4) und eingestellt, um Fluid oder Luft von der besagten mindestens einen zweiten Öffnung (4) zu den besagten Sensormitteln (5) zu fördern, und mindestens einen zweiten Kanal (50b) in Fluidverbindung mit der besagten mindestens einen dritten Öffnung (9) und eingestellt, um Fluid oder Luft von der besagten mindestens einen dritten Öffnung (9) zu den besagten Sensormitteln (5) zu fördern, wobei der besagte mindestens eine erste (50a) und der besagte mindestens eine zweite (50b) Kanal zu einem gleichen Sensormittel oder zu einem gleichen Kanal führen, die zu derselben Einheit oder demselben Sensormittel (5) führen und mittels eines entsprechenden ersten (VI) und zweiten (V2) Ventils, die durch einen von der Verarbeitungseinheit (8) gesteuerten Motor (M) entweder aus der Ferne oder von Hand betätigt werden können, unterbrochen werden.

17. Gruppe nach Anspruch 16, worin die besagten Ventile (VI und V2) durch einen gleichen Motor (M) betätigt werden können, wobei der besagte Motor (M) eingestellt ist, um eine Welle (S) zu betätigen, die zum Steuern der besagten Ventile (VI und V2) eingestellt ist, sodass durch Steuern der Bewegung des besagten ersten Ventils (VI) von einer geschlossenen Position des entsprechenden Kanals (50a) in eine offene Position des gleichen Kanals oder in jedem Fall durch Steuern einer Bewegung des besagten ersten Ventils (VI) zur Vergrößerung des freien Durchgangsabschnitts des besagten ersten Kanals (50a) die Bewegung des besagten zweiten Ventils (V2) aus einer geöffneten Position des entsprechenden Kanals (50b) in eine geschlossene Position davon bestimmt wird oder in jedem Fall wird eine Bewegung des besagten zweiten Ventils (V2) gesteuert, um den freien Durchgangsabschnitt des besagten zweiten Kanals (50b) zu verringern und umgekehrt.

18. Verfahren zur Analyse und Steuerung der Belüftung von mindestens einer Innenumgebung oder ersten Umgebung mit einer Gruppe nach irgendeinem der vorangegangenen Ansprüche, umfassend die folgenden Schritte:
- des Verbindens der besagten Öffnungen (3, 4, 9 und 11) mit entsprechenden Kanälen in Fluidverbindung mit einer entsprechenden Innenumgebung oder Außenumgebung;
- des Ausführens einer Erfassung von Daten durch die besagten Sensormittel (5) und ihres Übertragens an die besagte mindestens eine Verarbeitungseinheit (8);
- des Verarbeitens, mittels der besagten mindestens einen Verarbeitungseinheit (8), der von den besagten Sensormitteln (5) empfangenen Daten und in Abhängigkeit von den besagten untersuchten Daten des folglichen Einstellens eines Arbeitszyklus der besagten Gruppe.

19. Verfahren nach Anspruch 18, worin die besagte Verarbeitungseinheit (8) die von den Sensormitteln (5) empfangenen Daten verarbeitet und in Abhängigkeit von den besagten untersuchten Daten folglich einen Arbeitszyklus der besagten Gruppe einstellt, um den Durchgang von Fluid oder Luft zu erlauben:
- durch den besagten ersten (6) und den besagten zweiten (13) Pfad, in Übereinstimmung mit einem ersten und/oder dritten Arbeitszyklus, oder
- durch den besagten dritten Pfad (15) in Übereinstimmung mit einem zweiten Arbeitszyklus.

20. Verfahren nach Anspruch 18 oder 19, worin die besagte Verarbeitungseinheit (8), in Abhängigkeit von den besagten untersuchten Daten, entsprechende Ventile (10a, 10b, 23, 24) zum Öffnen/Schließen der besagten Pfade (6, 13, 15) und/oder Mittel (7, 12) zum Ansaugen oder Schieben von Fluid oder Luft entlang der besagten Pfade (6, 13, 15) für den Übergang von einem Arbeitszyklus der besagten Gruppe zu einem anderen Arbeitszyklus der besagten Gruppe oder zur Veränderung der Arbeitsbedingungen der besagten Gruppe steuert.

## Revendications

1. Groupe pour l'analyse et le contrôle de la ventilation d'au moins un environnement interne ou premier environnement, comprenant :
- une boîte de confinement ou carter (2),
- au moins une première ouverture (3) pour introduire un fluide ou de l'air dans un environnement interne ou premier environnement,
- au moins une deuxième ouverture (4) pour aspirer ou extraire un fluide ou de l'air d'un environnement externe ou deuxième environnement,
- des moyens de capteur ou d'examen (5) pour le fluide ou l'air aspiré depuis ladite au moins une deuxième ouverture (4), dans lequel lesdits moyens de capteur ou d'examen (5) sont agencés pour détecter la qualité de l'air ou du fluide aspiré depuis ladite au moins une deuxième ouverture (4) ou la présence ainsi que la valeur des composés dans l'air ou le fluide aspiré depuis ladite au moins une deuxième ouverture (4),
ladite boîte de confinement ou carter (2) délimitant au moins un premier trajet (6) de transmission ou transfert de fluide ou d'air depuis ladite au moins une première ouverture (3) à ladite au moins une deuxième ouverture (4),
ledit groupe comprenant également
- des premiers moyens (7) pour aspirer ou pousser le fluide ou l'air le long dudit au moins un premier trajet (6) défini pour transporter un fluide ou de l'air depuis ladite au moins une première ouverture (3) à ladite au moins une deuxième ouverture (4), et
- au moins une unité de traitement (8) définie pour recevoir des premières données concernant le fluide ou l'air d'un environnement externe ou deuxième environnement depuis lesdits moyens de capteur ou d'examen (5), et pour examiner lesdites premières données, de façon à entraîner ensuite lesdits premiers moyens pour aspirer ou pousser (7) et/ou moyens pour actionner au moins un clapet (10a, 10b) d'interception dudit premier trajet (6) en fonction des premières données examinées, de manière à réguler ou permettre/obstruer le flux de fluide ou d'air à travers ledit au moins un premier trajet (6) depuis ladite au moins une première ouverture (3) à ladite au moins une deuxième ouverture (4),
ledit groupe comprenant également au moins une troisième ouverture (9) pour aspirer ou extraire le fluide ou l'air depuis ledit au moins un environnement interne ou premier environnement et des moyens de capteur ou d'examen pour le fluide ou l'air aspiré depuis ladite au moins une troisième ouverture (9), dans lequel lesdits moyens de capteur ou d'examen (5) sont agencés pour détecter la qualité de l'air ou du fluide dans l'environnement interne ou aspiré depuis ladite au moins une troisième ouverture (9) ou la présence ainsi que la valeur des composés dans l'air ou le fluide dans ledit environnement interne ou aspiré depuis ladite au moins une troisième ouverture (9),
ladite au moins une unité de traitement (8) étant définie pour recevoir des deuxièmes données concernant le fluide ou l'air dudit au moins un environnement interne depuis lesdits moyens de capteur (5), et pour examiner lesdites deuxièmes données, de façon à entraîner lesdits premiers moyens pour aspirer ou pousser (7) et/ou lesdits moyens pour actionner au moins un clapet d'interception dudit au moins un premier trajet (6) en fonction desdites premières et desdites deuxièmes données examinées,
ledit groupe comprenant également au moins une quatrième ouverture (11) pour expulser le fluide ou l'air dans ledit environnement externe ou deuxième environnement et des deuxièmes moyens pour aspirer ou pousser le fluide ou l'air (12),
dans lequel ladite boîte de confinement ou carter (2) délimite au moins un deuxième trajet (13) pour transmettre ou transférer le fluide ou l'air depuis ladite au moins une troisième ouverture (9) à ladite au moins une quatrième ouverture (11),
dans lequel lesdits deuxièmes moyens d'aspiration ou de poussée pour aspirer ou pousser le fluide ou l'air (12) sont définis pour transporter le fluide ou l'air depuis ladite au moins une troisième ouverture (9) à ladite au moins une quatrième ouverture (11), et
dans lequel ladite au moins une unité de traitement (8) est réglée pour entraîner lesdits deuxièmes moyens pour aspirer ou pousser le fluide ou l'air (12) et/ou deuxièmes moyens pour actionner un clapet d'interception dudit au moins un deuxième trajet (13) en fonction desdites données examinées.

2. Groupe selon la revendication 1, dans lequel lesdits moyens de capteur ou d'examen (5) sont réglés pour détecter la présence ainsi que la valeur d'un ou de plusieurs des composés suivants : CO₂, oxygène, une matière particulaire formée des particules d'un diamètre inférieur à 10 µm, une matière particulaire formée des particules d'un diamètre inférieur à 2,5 µm, une matière particulaire formée des particules d'un diamètre inférieur à 0,3/0,1 µm, des composés organiques volatils et/ou du radon.

3. Groupe selon la revendication 2, dans lequel lesdits moyens de capteur ou d'examen comprennent un ou plusieurs des capteurs suivants :
- un capteur de CO₂ (5a) comprenant un capteur infrarouge avec un filtre spectral ;
- un capteur d'oxygène (5b) comprenant un capteur infrarouge ;
- un capteur de matière particulaire (5c) comprenant un compteur optique de particules avec des impulsions OPC ;
- un capteur de composés organiques volatils ou VOC (5d) comprenant un capteur électrochimique diffusé dans la pièce, oxydoréduit avec une fusion électrolytique.

4. Groupe selon l'une quelconque des revendications précédentes, comprenant au moins un clapet (10a, 10b) d'interception dudit trajet (6, 13) et des moyens pour actionner ledit au moins un clapet d'interception (10a, 10b) réglés pour déplacer ledit au moins un clapet d'interception (10a, 10b) de façon à modifier la section de passage libre dudit trajet (6, 13), dans lequel ladite au moins une unité de traitement (8) est réglée pour entraîner lesdits moyens d'actionnement en fonction desdites données examinées.

5. Groupe selon la revendication 3 ou 4 quand elle dépend de la revendication 3, comprenant au moins un élément de clapet et des moyens pour déplacer ledit au moins un élément de clapet,
dans lequel ladite boîte de confinement ou carter (2) délimite au moins un troisième trajet (15) pour transmettre ou transférer le fluide ou l'air depuis ladite au moins une troisième ouverture (9) à ladite au moins une première ouverture (3),
dans lequel ledit au moins un élément de clapet est réglé pour permettre ou obstruer ou empêcher le passage de fluide à travers ledit au moins un troisième trajet (15), et
dans lequel ladite au moins une unité de traitement (8) est réglée pour entraîner lesdits moyens pour qu'ils se déplacent en fonction desdites données examinées.

6. Groupe selon la revendication 5, dans lequel ledit au moins un troisième trajet (15) comprend, d'une extrémité d'entrée à une extrémité de sortie, une première section (15a) correspondant à une section initiale dudit au moins un deuxième trajet (13) et une deuxième section (15b) correspondant à une section terminale dudit au moins un premier trajet (6).

7. Groupe selon l'une quelconque des revendications précédentes quand elle dépend des revendications 3 et 5, dans lequel ledit groupe est agencé et réglable de façon à permettre le passage de fluide ou de l'air sélectivement :
- à travers ledit premier (6) et ledit deuxième (13) trajet, conformément à un premier et/ou un troisième cycle de fonctionnement, ou
- à travers ledit troisième trajet (15) conformément à un deuxième cycle de fonctionnement.

8. Groupe selon la revendication 7, dans lequel ladite unité de traitement (8) est réglée pour entraîner, en fonction desdites données examinées, des clapets respectifs (10a, 10b, 23, 24) pour ouvrir/fermer lesdits trajets (6, 13, 15) et/ou des moyens pour aspirer ou pousser (7, 12) le fluide ou l'air le long desdits trajets (6, 13, 15) pour le passage dudit premier et/ou troisième cycle de fonctionnement audit deuxième cycle de fonctionnement ou vice versa.

9. Groupe selon l'une quelconque des revendications précédentes, comprenant des moyens (17a, 17b, 17c, 17d, 17e) pour filtrer ou purifier le fluide ou l'air placés le long dudit au moins un trajet de transmission ou de transfert (6, 13, 15).

10. Groupe selon la revendication 9, dans lequel lesdits moyens de filtrage ou de purification (17a, 17b, 17c, 17d, 17e) comprennent des charbons actifs et/ou une lampe germicide et/ou des filtres H14, F8, F9 et/ou des filtres à air avec une efficacité élevée des particules.

11. Groupe selon l'une quelconque des revendications précédentes quand elle dépend de la revendication 3, comprenant au moins un échangeur de chaleur (8) interceptant ledit au moins un premier (6) et ledit au moins un deuxième (13) trajet et réglé pour permettre l'échange de chaleur entre le fluide ou l'air transporté à travers ledit au moins un premier trajet (6) et le fluide ou l'air transporté à travers ledit au moins un deuxième trajet (13).

12. Groupe selon l'une quelconque des revendications précédentes quand elle dépend de la revendication 3, comprenant au moins une section de contournement ou dérivation (6c) dudit premier (6) et/ou dudit deuxième (13) trajet ainsi qu'au moins un clapet de direction ou d'interception (10a, 10b) réglé pour permettre ou obstruer le flux de fluide ou d'air à travers ladite section de contournement ou de dérivation (6c) ainsi que pour permettre ou obstruer le passage de fluide ou d'air à travers une partie intermédiaire (6d) dudit premier (6) et/ou dudit deuxième (13) trajet, ledit groupe comprenant également des moyens d'actionnement réglés pour déplacer ledit au moins un clapet de direction ou d'interception (10a, 10b) de façon à modifier la section de passage libre de ladite section de contournement ou de dérivation (6c), dans lequel ladite au moins une unité de traitement (8) est réglée pour entraîner lesdits moyens d'actionnement en fonction desdites données examinées, de telle manière qu'il soit possible de déterminer ou de régler un premier et/ou un deuxième trajet principal comprenant ladite partie intermédiaire (6d) ou un premier et/ou un deuxième trajet auxiliaire comprenant ladite section de contournement (6c).

13. Groupe selon les revendications 11 et 12, dans lequel ledit au moins un clapet de direction ou clapet d'interception (10a, 10b) est réglé pour interrompre le passage à travers ledit échangeur de chaleur (18) du fluide ou de l'air transporté le long dudit premier (6) et/ou dudit deuxième (13) trajet.

14. Groupe selon la revendication 12 ou 13 et l'une quelconque des revendications qui précèdent quand elle dépend de la revendication 6, dans lequel ledit troisième trajet (15) comprend une troisième section (15c) entre ladite première (6) et ladite deuxième (13) section correspondant à ladite section de contournement (6c) .

15. Groupe selon l'une quelconque des revendications précédentes, dans lequel ladite unité de traitement (8) reçoit et traite les données reçues des moyens de capteur (5) avec une période ou un intervalle de détection compris entre 5 secondes et une minute, ou entre 5 et 25 secondes ou entre 10 et 20 secondes.

16. Groupe selon l'une quelconque des revendications précédentes quand elle dépend de la revendication 2, comprenant au moins un premier conduit (50a) en communication fluidique avec ledit au moins une deuxième ouverture (4) et défini pour transporter le fluide ou l'air de ladite au moins une deuxième ouverture (4) auxdits moyens de capteur (5) et au moins un deuxième conduit (50b) en communication fluidique avec ladite au moins une troisième ouverture (9) et défini pour transporter le fluide ou l'air de ladite au moins une troisième ouverture (9) auxdits moyens de capteur (5), ledit au moins un premier (50a) et ledit au moins un deuxième (50b) conduit amenant à un même moyen de capteur ou à un même conduit amenant à la même unité ou aux mêmes moyens de capteur (5) et étant interceptés au moyen d'un premier (VI) et d'un deuxième (V2) clapets respectifs actionnables par un moteur (M) commandé par l'unité de traitement (8) ou à distance ou manuellement.

17. Groupe selon la revendication 16, dans lequel lesdits clapets (VI et V2) sont actionnables par un même moteur (M), ledit moteur (M) étant réglé pour actionner un arbre (S) réglé pour commander lesdits clapets (VI et V2) de telle manière qu'en contrôlant le mouvement dudit premier clapet (VI) d'une position fermée du conduit (50a) respectif à une position ouverte du même conduit ou dans tous les cas en contrôlant un mouvement dudit premier clapet (VI) de façon à augmenter la section de passage libre dudit premier conduit (50a), le mouvement dudit deuxième clapet (V2) est déterminé d'une position ouverte du conduit (50b) respectif à une position fermée de celui-ci ou dans tous les cas un mouvement dudit deuxième clapet (V2) est contrôlé de manière à réduire la section de passage libre dudit deuxième conduit (50b) et vice versa.

18. Procédé pour l'analyse et le contrôle de la ventilation d'au moins un environnement interne ou premier environnement avec un groupe selon l'une quelconque des revendications précédentes, comprenant les étapes suivantes :
- raccordement desdites ouvertures (3, 4, 9 et 11) aux conduits respectifs en communication fluidique avec un environnement interne ou un environnement externe respectifs ;
- réalisation d'une détection de données par lesdits moyens de capteur (5) et transmission des celles-ci à ladite au moins une unité de traitement (8) ;
- traitement, au moyen de ladite au moins une unité de traitement (8), des données reçues par lesdits moyens de capteur (5) et en fonction desdites données examinées, définissant ensuite un cycle de fonctionnement dudit groupe.

19. Procédé selon la revendication 18, dans lequel ladite unité de traitement (8) traite les données reçues des moyens de capteur (5) et en fonction desdites données examinées définit ensuite un cycle de fonctionnement dudit groupe de façon à permettre le passage de fluide ou d'air :
- à travers ledit premier (6) et ledit deuxième (13) trajet, conformément à un premier et/ou un troisième cycle de fonctionnement, ou
- à travers ledit troisième trajet (15) conformément à un deuxième cycle de fonctionnement.

20. Procédé selon la revendication 18 ou 19, dans lequel ladite unité de traitement (8) commande, en fonction desdites données examinées, des clapets (10a, 10b, 23, 24) respectifs pour ouvrir/fermer lesdits trajets (6, 13, 15) et/ou des moyens (7, 12) pour aspirer ou pousser le fluide ou l'air le long desdits trajets (6, 13, 15) pour le passage d'un cycle de fonctionnement dudit groupe à un autre cycle de fonctionnement dudit groupe ou pour modifier les conditions de fonctionnement dudit groupe.
